# EUROPÄISCHE PATENTSCHRIFT

(11) **EP 1 519 186 B1**
(45) Veröffentlichungstag und Bekanntmachung des Hinweises auf die Patenterteilung: **25.09.2013**
(21) Anmeldenummer: 04020477.8
(22) Anmeldetag: 28.08.2004
(51) Int. Cl.: G01N 15/08, G01N 7/10

(54) **Prüfverfahren und -vorrichtung für luftdurchlässige Materialien**
Test method and apparatus for air-permeable materials
Méthode et appareil de test pour des matériaux perméables à l'air

(30) Priorität: 27.09.2003 DE 10344992
(43) Veröffentlichungstag der Anmeldung: 30.03.2005
(73) Patentinhaber: Bayerische Motoren Werke Aktiengesellschaft, 80809 München (DE)
(72) Erfinder: Schmitt, Josef, 84130 Dingolfing (DE)

(56) Entgegenhaltungen:
- EP-A- 0 630 585
- DE-U- 20 000 779
- GB-A- 1 345 460
- GB-A- 2 252 632
- US-A- 5 551 284
- US-A1- 2003 074 954

## Beschreibung

Die Erfindung bezieht sich auf ein Prüfverfahren und eine Prüfvorrichtung für luftdurchlässige Materialien, nach dem Oberbegriff des Patentanspruchs 1 bzw. 5.

Es ist bekannt, dass die Gebrauchsfähigkeit von luftdurchlässigen Materialien und insbesondere der Sitzkomfort und die Verschleißbeständigkeit von Lederbezügen für Kraftfahrzeug-Sitze nicht nur vom Feuchtigkeitsabsorptions- und -diffusionsvermögen, sondern in hohem Maße auch von der Luftdurchlässigkeit derartiger Materialien abhängig ist. Um diese zu überprüfen, wird im Allgemeinen eine Probe des luftdurchlässigen Materials in einer Prüfkammer mit einer Luftdruckdifferenz beaufschlagt und der so entstehende Luftdurchsatz an der Materialprobe mit Hilfe eines Durchflusssensors als Maß für die Luftdurchlässigkeit der Materialprobe ermittelt. Dabei ergeben sich jedoch vor allem bei schwach luftdurchlässigen Materialien, also etwa Leder, so hohe Messwertschwankungen, dass allenfalls eine grobe Abschätzung, nicht aber eine genaue Aussage über den Luftdurchlässigkeitswert des zu prüfenden Materials möglich ist.

Aufgabe der Erfindung ist es, ein Prüfverfahren und ein Prüfgerät der eingangs genannten Art zu schaffen, mit denen sich auf einfache und zuverlässige Weise der Luftdurchlässigkeitsgrad insbesondere von Bekleidungs- oder Bezugsmaterialien, vor allem Leder, exakt ermitteln lässt.

Diese Aufgabe wird erfindungsgemäß durch das im Patentanspruch 1 gekennzeichnete Prüfverfahren bzw. das im Patentanspruch 4 gekennzeichnete Prüfgerät gelöst.

Erfindungsgemäß wird die Luftdurchlässigkeit des zu prüfenden Materials nicht durch Messung des momentanen Luftdurchsatzes, sondern im Wege einer integralen Prüfmethode mit der auf vorgegebene Druckgrenzen bezogenen Druckabfallzeit als für den Durchlässigkeitsgrad maßgeblicher Kennwert ermittelt und so auf messtechnisch äußerst einfache Weise ein gleich bleibend exaktes Prüfergebnis über einen weiten Bereich unterschiedlicher Materialsorten erhalten.

Vorzugsweise sind die Druckgrenzen je nach zu prüfender Materialsorte veränderlich einstellbar, und im Hinblick auf eine möglichst schonende Behandlung der Materialprobe und eine verbesserte Kontrolle des Prüfzyklus empfiehlt es sich, die Druckkammer entlüftungsseitig an eine von dieser durch die Materialprobe getrennte Entlüftungskammer anzuschließen, welche gleichzeitig mit der Druckkammer druckgasbefüllt und anschließend über ein selektiv betätigtes Absperrventil drucklos geschaltet wird.

In besonders bevorzugter Ausgestaltung des erfindungsgemäßen Prüfgeräts ist die Materialprobe randseitig zwischen zwei elastomeren Dichtringen eingespannt, wobei zumindest eine der Spannflächen mit einem radial innerhalb des Probenrands und einem weiteren, radial außerhalb des Probenrands an die Dichtringe angepressten Ringwulst versehen ist, wodurch Gasleckagen im Nebenstrom zur Materialprobe und daraus resultierende Verfälschungen des Prüfergebnisses wirksam unterbunden werden.

Die Erfindung wird nunmehr anhand eines Ausführungsbeispiels in Verbindung mit den Zeichnungen näher erläutert. Es zeigen in stark schematisierter Darstellung:
- **Fig. 1**: ein Luftdurchlässigkeits-Prüfgerät nach der Erfindung, und
- **Fig. 2**: einen vergrößerten Ausschnitt des Prüfgeräts nach Fig. 1 im Bereich des Probenhalters.

Das in den Fig. gezeigte Prüfgerät enthält einen zweiteiligen Prüfzylinder 1, bestehend aus einer Druckkammer 2 und einer von dieser durch eine Probe 3 des zu prüfenden Materials getrennten Entlüftungskammer 4 einschließlich eines die Entlüftungskammer 4 im geöffneten Zustand drucklos schaltenden Absperrventils 5. Über eine gemeinsame Druckzufuhrleitung 6 sind die beiden Kammern 2, 4 unter Zwischenschaltung eines Steuerventils 7 an eine Druckluftquelle 8 angeschlossen. Komplettiert wird das Prüfgerät durch einen den Luftdruck in der Druckkammer 2 messenden Drucksensor 9 und eine von diesem gesteuerte Zeitmessuhr 10, welche die Druckabfallzeit in der Druckkammer 2 zwischen einer am Sensor 9 veränderlich voreinstellbaren oberen und einer ebenfalls veränderlich voreinstellbaren unteren Druckgrenze misst. Bei einem dritten, auf einen Wert oberhalb der oberen Druckgrenze einstellbaren Druckniveau wird ein entsprechendes Steuersignal vom Drucksensor 9 an eine diesem nachgeordnete Steuereinheit 11 abgegeben.

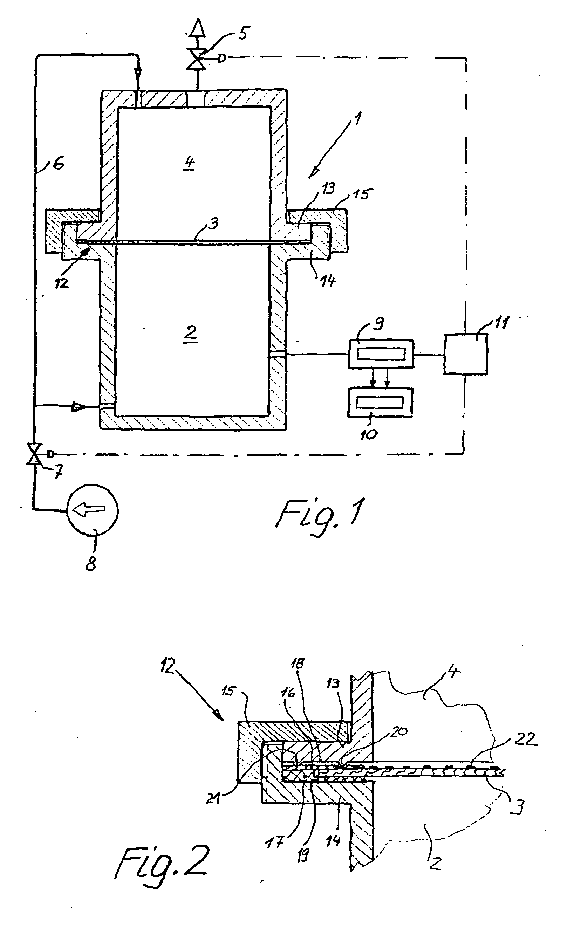

Wie aus Fig. 2 am deutlichsten ersichtlich ist, sind die beiden Kammern 2, 4 im Bereich des Probenhalters 12 über ineinander greifende Flanschabschnitte 13, 14 und eine Überwurfmutter 15 unter Zwischenlage zweier Elastomer-Dichtringe 16, 17, zwischen die die Materialprobe 3 eingelegt wird, miteinander verbunden, wobei zumindest an einer der stirnseitigen Spannflächen 18, 19 der Flanschabschnitte 13, 14 zwei zueinander konzentrische Ringwülste 20, 21 angeformt sind, von denen der radial innere - 20 - eine druckdichte Luftsperre im Bereich des Probenrandes und der andere - 21 - eine sichere Abdichtung radial außerhalb der Materialprobe 3 bewirkt. Auf diese Weise werden aus der Druckkammer 2 unter Umgehung der Materialprobe 3 entweichende Strömungsleckagen, die das Prüfergebnis verfälschen könnten, wirksam unterbunden.

Auf der Entlüftungsseite ist der Probenhalter 12 mit einem Stützgitter 22 für die Materialprobe 3 versehen, und zur Prüfung von im Durchmesser kleineren Materialproben 3 können entsprechende Adapterstücke (nicht gezeigt) zwischen die Spannflächen 18, 19 und die jeweiligen Dichtringe 16 bzw. 17 eingesetzt werden, welche im fest verschraubten Zustand der Zylinderteile 2, 4 wiederum über zueinander konzentrische Ringwülste eine örtlich überhöhte Anpresskraft im und radial außerhalb des Probenrandes auf die Dichtringe 16, 17 ausüben.

Nach dem Einlegen der Materialprobe 3 und dem Verschließen des Prüfzylinders 1 wird das Steuerventil 7 geöffnet, bis der Luftdruck in beiden Prüfkammern 2, 4 auf den vorprogrammierten, dritten Druckwert oberhalb der oberen Druckgrenze angestiegen ist, woraufhin der Drucksensor 9 anspricht und das Steuerventil 7 auf dem Wege über die Steuereinheit 11 geschlossen wird. Nach einer kurzen Haltezeit, die zur Beruhigung des Luftvolumens in den Prüfkammern 2, 4 ausreicht, wird das Absperrventil 5 geöffnet, so dass die Entlüftungskammer 4 druckentlastet wird und sich die Druckkammer 2 unter der Wirkung der Druckdifferenz zwischen den Prüfkammem 2, 4 auf dem Wege über die Materialprobe 3 entleert. Sobald der Druck in der Druckkammer 2 auf die vorgegebene obere Druckgrenze abgesunken ist, spricht der Drucksensor 9 an und startet die Zeitmessuhr 10, bis die untere Druckgrenze in der Druckkammer 2 durchschritten und die Zeitmessuhr 10 durch ein entsprechendes Stoppsignal des Drucksensors 9 angehalten wird.

Die so ermittelte Druckabfallzeit, bezogen auf die vorgegebenen Druckgrenzen, ist ein exaktes Maß für die Luftdurchlässigkeit der Materialprobe 3, wobei die Druckgrenzen und die Probengröße aus Gründen einer einfachen Vergleichbarkeit für jede Materialsorte gleich gewählt werden. Das beschriebene Prüfgerät ist konstruktiv und messtechnisch sehr einfach aufgebaut, arbeitet mit kurzen Prüfzyklen und liefert stabile Messwerte, so dass lange Messwertreihen, aus denen der Luftwiderstand des Prüfmaterials gemittelt wird, entfallen können.

## Patentansprüche

1. Verfahren zur Prüfung von luftdurchlässigen Materialien, insbesondere von Leder, bei dem eine durch eine Probe (3) des zu prüfenden Materials in eine Entlüftungsseite und eine Druckseite unterteilte *Messkammer* (2, 4) bis über eine vorgegebene obere Druckgrenze druckgasbefüllt und anschließend auf dem Wege über die Probe entlüftet wird und dabei die Zeitdauer zwischen der vorgegebenen oberen und einer vorgegebenen unteren Druckgrenze als Maß für die Luftdurchlässigkeit der Materialprobe ermittelt wird, **dadurch gekennzeichnet, dass**
die *Messkammer* (2, 4) gleichzeitig auf der Druck-wie auch auf der Entlüftungsseite der Probe (3) bis über die vorgegebene obere Druckgrenze druckgasbefüllt und dann auf der Entlüftungsseite *nach außen* entlüftet wird und anschließend ab Erreichen der oberen Druckgrenze die Druckabfallzeit bis zur unteren Druckgrenze auf der Druckseite der *Messkammer* gemessen wird.

2. Verfahren nach Anspruch 1, **dadurch gekennzeichnet, dass**
die Druckgrenzen veränderlich einstellbar sind.

3. Verfahren nach Anspruch 1 oder 2, **dadurch gekennzeichnet, dass**
als Gasfüllung Druckluft verwendet wird.

4. Prüfgerät zur Durchführung des Verfahrens nach Anspruch 1, mit einer durch einen Probenhalter (12) für das zu prüfende Material (3) in eine Entlüftungsseite und eine an eine Druckgaszufuhrleitung (6) einschließlich eines Steuerventils (7) angeschlossene Druckseite unterteilten *Messkammer* (2, 4), welche auf der Druckseite des Probenhalters (12) mit einem bei einer vorgegebenen oberen und einer vorgegebenen unteren Druckgrenze ansprechenden Drucksensor (9) versehen und diesem eine die Druckabfallzeit zwischen oberer und unterer Druckgrenze messende Zeitmessuhr (10) nachgeschaltet ist, **dadurch gekennzeichnet, dass**
die Entlüftungsseite der *Messkammer* (2, 4) als gleichzeitig mit der Druckseite bis über die obere Druckgrenze druckgasbefüllbare, über ein Absperrventil (5) selektiv druckentlastbare Entlüftungskammer (4) ausgebildet ist.

5. Prüfgerät nach Anspruch 4, **gekennzeichnet durch**
einen auf veränderlich vorgegebene Druckgrenzen einstellbaren *Drucksensor* (9).

6. Prüfgerät nach Anspruch 4 oder 5, **dadurch gekennzeichnet, dass**
zum Befüllen der *Messkammer* (2, 4) eine *Druckluftquelle* (8) vorgesehen ist.

7. Prüfgerät nach einem der Ansprüche 4 bis 6, **dadurch gekennzeichnet, dass**
der Probenhalter (12) zwei die Materialprobe (3) randseitig zwischen sich aufnehmende Dichtringe (16, 17) aufweist und zumindest eine der Spannflächen (18, 19) des Probenhalters mit einem radial innerhalb des Probenrands und einem radial außerhalb des Probenrands an den angrenzenden Dichtring (16) angepressten Ringwulst (20, 21) versehen ist.

8. Prüfgerät nach einem der Ansprüche 4 bis 7, **dadurch gekennzeichnet, dass**
der Probenhalter (12) auf der Entlüftungsseite mit einem Stützgitter (22) für die Materialprobe (3) versehen ist.

## Claims

1. A method of testing air-permeable materials, especially leather, wherein a measuring chamber (2,4) divided by a sample (3) of the material under test into a venting side and a pressure side is filled with compressed gas up to above a set upper pressure limit and then vented via the sample, the time between the set upper and a set lower pressure limit being determined as a measure of the permeability to air of the sample of material, **characterised in that**
the measuring chamber (2, 4) is simultaneously filled with compressed gas on the pressure side and on the venting side of the sample (3) up to above the set upper pressure limit and is then vented towards the exterior on the venting side and when the upper pressure limit is reached, the time taken by the pressure to fall to the lower limit is measured on the pressure side of the measuring chamber.

2. A method according to claim 1, **characterised in that**
the pressure limits are variably adjustable.

3. A method according to claim 1 or claim 2, **characterised in that**
the filling gas is compressed air.

4. A test device for working the method according to claim 1, comprising a measuring chamber (2, 4) divided by a sample-holder (12) for the material (3) under test into a venting side and a pressure side connected to a compressed-gas supply line (6) and including a control valve (7), the measuring chamber being provided, on the pressure side of the sample-holder (12), with a pressure sensor (9) which responds to a set upper and a set lower pressure limit and is followed downstream by a clock (10) which measures the time taken for the pressure to fall from the upper to the lower pressure limit, **characterised in that**
the venting side of the measuring chamber (2, 4) is in the form of a venting chamber (4) which can simultaneously with the pressure side be filled with compressed gas to above the upper pressure limit and can be selectively depressurised via a shut-off valve (5).

5. A test device according to claim 4, **characterised by**
a pressure sensor (9) adjustable to various set pressure limits.

6. A test device according to claim 4 or claim 5, **characterised in that**
a source of compressed air (8) is provided for filling the measuring chamber (2, 4).

7. A test device according to any of claims 4 to 6, **characterised in that**
the sample-holder (12) comprises two sealing rings (16, 17) receiving the edges of a sample of material (3) between them and at least one of the clamping surfaces (18, 19) of the sample-holder has an annular bead (20, 21) radially inside the edge of the sample and an annular bead (20, 21) radially outside the edge of the sample and pressed against the adjoining sealing ring (16).

8. A test device according to any of claims 4 to 7, **characterised in that**
on the venting side the sample-holder (12) is provided with a mesh (22) for supporting the sample (3) of material.

## Revendications

1. Procédé de contrôle de la perméabilité d'une matière à l'air notamment du cuir selon lequel
on remplit avec du gaz sous pression une chambre de mesure (2, 4) subdivisée par la matière à contrôler en un côté sortie d'air (3) et un côté pression, le gaz comprimé étant à une pression supérieure à une pression limite supérieure, puis la chambre se vide d'air à travers l'échantillon et on mesure la durée entre une limite de pression inférieure et une limite de pression supérieure, prédéfinies, comme mesure de la perméabilité à l'air de l'échantillon de matière,
**caractérisé en ce qu'**
on remplit en même temps avec du gaz sous pression le côté pression ainsi que le côté sortie d'air de l'échantillon (3) dans la chambre de mesure (2, 4) jusqu'à une limite supérieure prédéfinie de pression puis sur le côté sortie d'air, on évacue vers l'extérieur et ensuite à partir de la limite de pression supérieure on mesure le temps de chute de la pression jusqu'à la limite inférieure de pression sur le côté de pression de la chambre de mesure.

2. Procédé selon la revendication 1,
**caractérisé en ce que**
les limites de pression sont réglables de manière variable.

3. Procédé selon la revendication 1 ou 2,
**caractérisé en ce que**
on utilise de l'air comprimé comme remplissage de gaz.

4. Appareil de contrôle pour appliquer le procédé selon la revendication 1, comportant une chambre de mesure (2, 4) subdivisée par un support d'échantillon (12) pour recevoir la matière (3) à contrôler en un côté sortie d'air et un côté pression reliés à la conduite d'alimentation en gaz sous pression (6) y compris une soupape de commande (7), cette chambre sur le côté pression du support d'échantillon (12) étant muni d'un capteur de pression (9) répondant à une limite de pression supérieure prédéfinie et à une limite de pression inférieure prédéfinie et un chronomètre (10) en aval du capteur de pression pour mesurer le temps de chute de la pression entre la limite de pression supérieure et la limite de pression inférieure,
**caractérisé en ce que**
le côté de sortie d'air de la chambre de mesure (2, 4) peut être rempli de gaz sous pression en même temps du côté pression jusqu'à la limite de pression supérieure et par une vanne d'arrêt (5), sélectivement dans la chambre de sortie d'air (4) qui peut être déchargée en pression.

5. Appareil de contrôle selon la revendication 4,
**caractérisé par**
un capteur de pression (9) réglable sur des limites de pressions prédéfinies, variables.

6. Appareil de contrôle selon la revendication 4 ou 5,
**caractérisé par**
une source d'air comprimé (8) pour remplir la chambre de mesure (2, 4).

7. Appareil de contrôle selon l'une des revendications 4 à 6,
**caractérisé en ce que**
le support d'échantillon (12) comporte deux anneaux d'étanchéité (16, 17) recevant entre le bord de l'échantillon de matière (3) et au moins l'une des surfaces tendues (18, 19) du support d'échantillon et muni d'un bourrelet annulaire (20, 21) dépassant radialement du bord de l'échantillon et pressé contre le joint d'étanchéité (16) adjacent situé radialement au-delà du bord de l'échantillon.

8. Appareil de contrôle selon l'une des revendications 4 à 7,
**caractérisé en ce que**
le support d'échantillon (12) est muni d'une grille de support (22) pour l'échantillon de matière (3) sur le côté sortie d'air.
